(19) **Europäisches Patentamt**

**European Patent Office**

**Office européen des brevets**

(11) **EP 1 155 289 B1**

(12) **EUROPEAN PATENT SPECIFICATION**

(45) Date of publication and mention
of the grant of the patent:
**05.07.2006 Bulletin 2006/27**

(51) Int Cl.:
***G01F 1/50*** (2006.01)

(21) Application number: **00913631.8**

(86) International application number:
**PCT/US2000/004978**

(22) Date of filing: **24.02.2000**

(87) International publication number:
**WO 2000/050851 (31.08.2000 Gazette 2000/35)**

(54) **FLOW MEASUREMENT WITH DIAGNOSTICS**

STRÖMUNGSMESSUNG MIT DIAGNOSTISCHEN MITTELN

DEBITMETRE POURVU D'UNE FONCTION DE DIAGNOSTIC

(84) Designated Contracting States:
**DE FR GB IT NL**

(30) Priority: **25.02.1999 US 257896**

(43) Date of publication of application:
**21.11.2001 Bulletin 2001/47**

(73) Proprietor: **ROSEMOUNT INC.**
**Eden Prairie, MN 55344 (US)**

(72) Inventors:
• **ERYUREK, Evren**
**Minneapolis, MN 55410 (US)**

• **KAVAKLIOGLU, Kadir**
**Eden Prairie**
**Minnesota 55347 (US)**

(74) Representative: **Cross, Rupert Edward Blount et al**
**Boult Wade Tennant**
**Verulam Gardens**
**70 Gray's Inn Road**
**London WC1X 8BT (GB)**

(56) References cited:
**EP-A- 0 807 804        US-A- 4 654 813**
**US-A- 5 347 843**

**Description**

## BACKGROUND OF THE INVENTION

Fluid flow meters are used in industrial process control environments to measure fluid flow and provide flow signals for flow indicators and controllers. Inferential flow meters measure fluid flow in a pipe by measuring a pressure drop near a discontinuity within the pipe. The discontinuity (primary element) can be an orifice, a nozzle, a venturi, a pitot tube, a vortex shedding bar, a target or even a simple bend in the pipe. Flow around the discontinuity causes both a pressure drop and increased turbulence. The pressure drop is sensed by a pressure transmitter (secondary element) placed outside the pipe and connected by impulse lines or impulse passageways to the fluid in the pipe. Reliability depends on maintaining a correct calibration. Erosion or buildup of solids on the primary element can change the calibration. Impulse lines can become plugged over time, which also adversely affects calibration.

Disassembly and inspection of the impulse lines is one method used to detect and correct plugging of lines. Another known method for detecting plugging is to periodically add a "check pulse" to the measurement signal from a pressure transmitter. This check pulse causes a control system connected to the transmitter to disturb the flow. If the pressure transmitter fails to accurately sense the flow disturbance, an alarm signal is generated indicating line plugging. Another known method for detecting plugging is sensing of both static and differential pressures. If there is inadequate correlation between oscillations in the static and differential pressures, then an alarm signal is generated indicating line plugging. Still another known method for detecting line plugging is to sense static pressures and pass them through high pass and low pass filters. Noise signals obtained from the filters are compared to a threshold, and if variance in the noise is less than the threshold, then an alarm signal indicates that the line is blocked.

EP-A-0,807,804 describes a method for calibrating a differential pressure fluid measuring system. This document teaches providing a synergistic method of obtaining higher measurement accuracy by calibrating the assembled combination of primary and secondary system elements with actual reference to fluid flow. Additionally, this reference teaches characterizing a differential pressure transmitter and subsequently using the stored data obtained during characterization in order to reduce or eliminate measurement errors.

These known methods rely on providing static pressure sensors or disassembly of the flow meter or use of an external control system for diagnostics, increasing complexity and reducing reliability. These known methods do not provide for diagnosing the condition of the primary element. There is thus a need for a better diagnostic technology providing more predictive, less reactive maintenance for reducing cost or improving reliability.

## SUMMARY OF THE INVENTION

The present invention resides in a pressure transmitter according to Claim 1, a diagnostic method according to Claim 7 and a computer program product according to Claim 8.

## BRIEF DESCRIPTION OF THE DRAWINGS

FIG. 1 is an illustration of a typical fluid processing environment for the diagnostic flow meter.
FIG. 2 is a pictorial illustration of an embodiment of a transmitter used in a fluid flow meter that diagnoses the condition of its impulse lines and/or primary element.
FIG. 3 is a block diagram of a fluid flow meter that diagnoses a condition of its pressure generator.
FIG. 4 is a block diagram of a fluid flow meter that diagnoses the condition of its impulse lines.
FIG. 5 is a block diagram of a fluid flow meter that diagnoses the condition of its primary element.
FIG. 6 is a flow chart of a process diagnosing the condition of impulse lines.
FIG. 7 illustrates a diagnostic fluid flow meter that has a pitot tube for a primary element.
FIG. 8 illustrates a diagnostic fluid flow meter that has an in-line pitot tube for a primary element.
FIG. 9 illustrates a diagnostic fluid flow meter that has an integral orifice plate for a primary element.
FIG. 10 illustrates a diagnostic fluid flow meter than has an orifice plate clamped between pipe flanges for a primary element.
FIG. 11 illustrates a diagnostic fluid flow meter that has a venturi for a primary element.
FIG. 12 illustrates a diagnostic fluid flow meter that has a nozzle for a primary element.
FIG. 13 illustrates a diagnostic fluid flow meter that has an orifice plate for a primary element.
FIG. 14 is a flow chart of a process of diagnosing the condition of a primary element.
FIG. 15 is a flow chart of a process of diagnosing the condition of both impulse lines and a primary element.
FIG. 16 is an illustration of a transmitter with remote seals and diagnostics.

FIG. 17 is a schematic illustration of a transmitter with diagnostic features connected to a tank to measure a time integral of flow in and out of the tank.

## DETAILED DESCRIPTION OF THE PREFERRED EMBODIMENTS

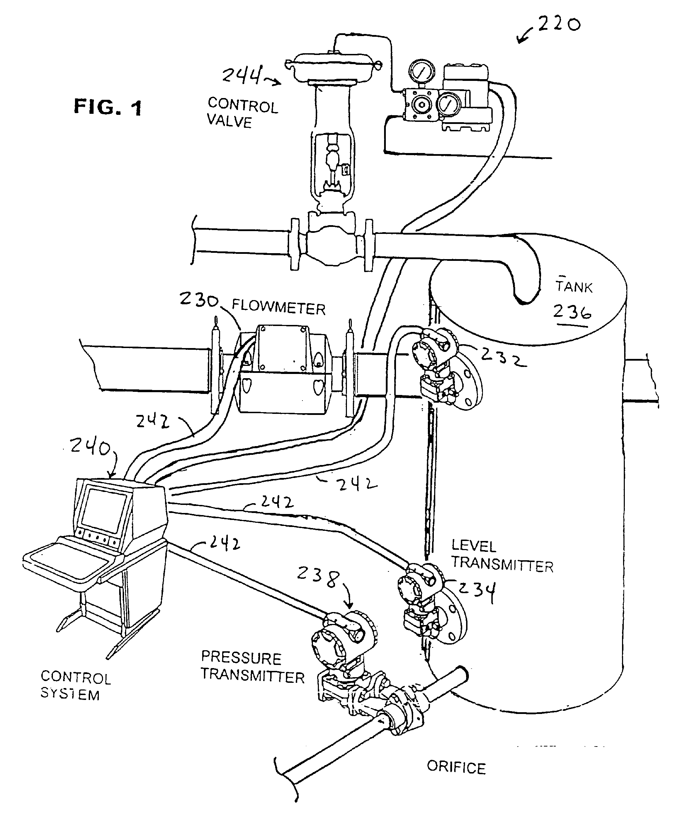

In FIG. 1, a typical environment for diagnostic flow measurement is illustrated at 220. In FIG. 1, process variable transmitters such as flow meter 230, level transmitters 232, 234 on tank 236 and integral orifice flow meter 238 are shown connected to control system 240. Process variable transmitters can be configured to monitor one or more process variables associated with fluids in a process plant such as slurries, liquids, vapors and gasses in chemical, pulp, petroleum, gas, pharmaceutical, food and other fluid processing plants. The monitored process variables can be pressure, temperature, flow, level, pH, conductivity, turbidity, density, concentration, chemical composition or other properties of fluids. Process variable transmitter includes one or more sensors that can be either internal to the transmitter or external to the transmitter, depending on the installation needs of the process plant. Process variable transmitters generate one or more transmitter outputs that represent the sensed process variable. Transmitter outputs are configured for transmission over long distances to a controller or indicator via communication busses 242. In typical fluid processing plants, a communication buss 242 can be a 4-20 mA current loop that powers the transmitter, or a fieldbus connection, a HART protocol communication or a fiber optic connection to a controller, a control system or a readout. In transmitters powered by a 2 wire loop, power must be kept low to provide intrinsic safety in explosive atmospheres.

In Fig. 1, integral orifice flow meter 238 is provided with a diagnostic output which is also coupled along the communication bus 242 connected to it. Control system 240 can be programmed to display the diagnostic output for a human operator, or can be programmed to alter its operation when there is a diagnostic warning from flow meter 238. Control system 240 controls the operation of output devices such as control valve 244, pump motors or other controlling devices.

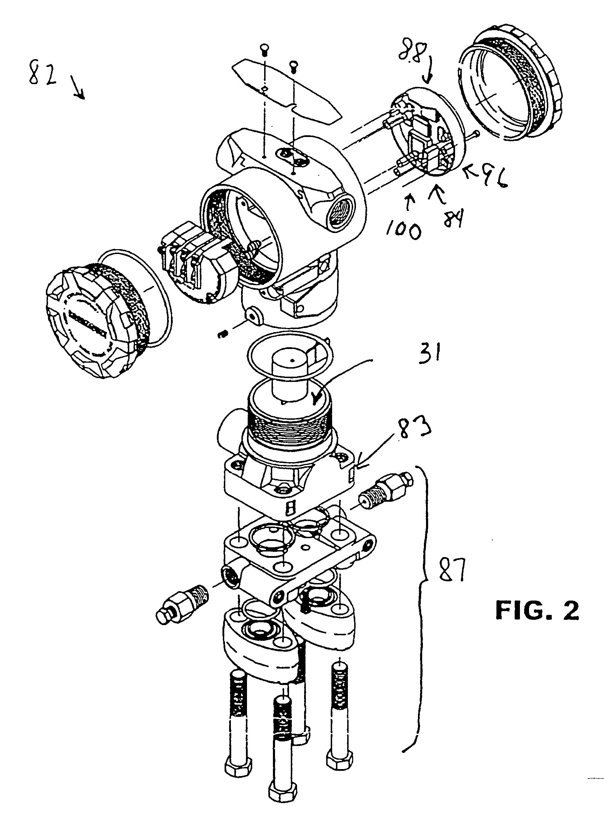

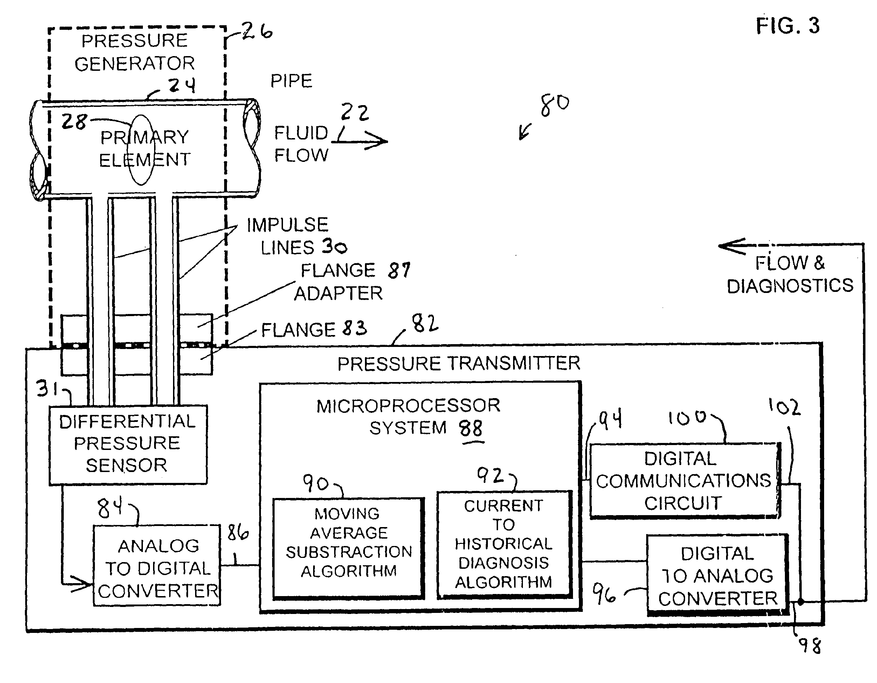

In Fig. 2, an exploded view of a typical diagnostic transmitter 82 is shown generally. Transmitter 82 includes a flange 83 for receiving a differential pressure, a differential pressure sensor 31, electronics including an analog to digital converter 84, a microprocessor system 88, a digital to analog converter 96, and a digital communications circuit 100. Transmitter 82 is bolted to flange adapter 87. Microprocessor 88 is programmed with diagnostic algorithms as explained by examples shown in FIGS. 3, 6, 14 and 15. Flange adapter 87 connects to impulse pipes which, in turn, connect to flow around a primary flow element (not shown in FIG. 2). The arrangement of transmitter 82 of FIG. 2 is explained in more detail in FIG. 3.

In FIG. 3, a block diagram shows a first embodiment of a fluid flow meter 80 adapted to sense fluid flow 22 in pipe 24. Fluid flow meter 80 includes a pressure generator 26 that includes a primary element 28 and impulse lines 30 that couple pressures generated in the fluid flow around the primary element 28 to a differential pressure sensor 31 in a pressure transmitter 82. The term "pressure generator" as used in this application means a primary element (e.g., an orifice plate, a pitot tube, a nozzle, a venturi, a shedding bar, a bend in a pipe or other flow discontinuity adapted to cause a pressure drop in flow) together with impulse pipes or impulse passageways that couple the pressure drop from locations near the primary element to a location outside the flow pipe. The spectral and statistical characteristics of this pressure presented by this defined "pressure generator" at a location outside the flow pipe to a connected pressure transmitter 82 can be affected by the condition of the primary element as well as on the condition of the impulse pipes. The connected pressure transmitter 82 can be a self-contained unit, or it can be fitted with remote seals as needed to fit the application. A flange 83 on the pressure transmitter 82 (or its remote seals) couples to a flange adapter 87 on the impulse lines 30 to complete the pressure connections. Pressure transmitter 82 couples to a primary flow element 28 via impulse lines 30 to sense flow. The pressure transmitter 82 comprises a differential pressure sensor 31 adapted to couple to the impulse lines 30 via a flange arrangement. An analog to digital converter 84 couples to the pressure sensor 31 and generates a series of digital representations of the sensed pressure at 86. A microprocessor system 88 receives the series of digital representations of pressure at 86 and has a first algorithm 90 stored therein calculating a difference between the series of digital representations 86 and a moving average of the series of digital representations. A second algorithm 92 is also stored in the microprocessor system 88 that receives the difference calculated by algorithm 90 and calculates a trained data set of historical data during a training mode and calculates a current data set during a monitoring mode and generates diagnostic data 94 as a function of the current data set relative to the historical data indicating changes in the condition of pressure generator 26. A digital to analog converter 96 coupled to the microprocessor system 88 generates an analog transmitter output 98 indicative of the sensed flow rate. A digital communication circuit 100 receives the diagnostic data 94 from the microprocessor system 88 and generates a transmitter output 102 indicating the diagnostic data. The analog output 98 and the diagnostic data 102 can be coupled to indicators or controllers as desired.

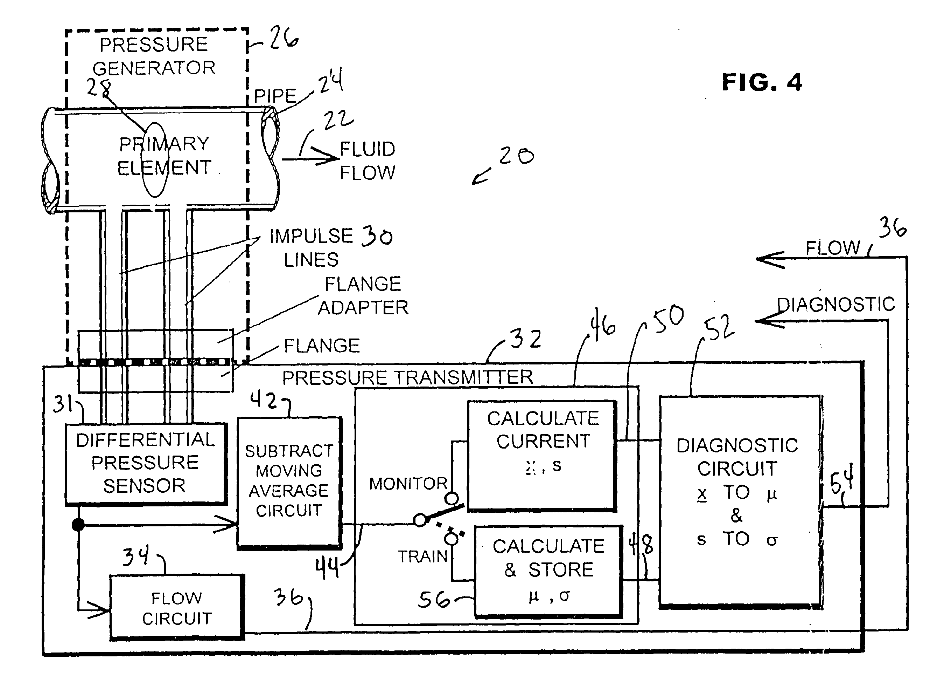

In FIG. 4, a block diagram shows a further embodiment of a fluid flow meter 20 adapted to sense fluid flow 22 in pipe 24. The fluid flow meter 20 in FIG. 4 is similar to the fluid flow meters 80 of FIG. 3 and the same reference numerals used in FIGS. 3 are also used in FIG. 4 for similar elements. Fluid flow meter 20 includes a pressure generator 26 that includes a primary element 28 and impulse lines 30 that couple pressures generated in the fluid flow around the primary element 28 to a differential pressure sensor 31 in a pressure transmitter 32. The pressure transmitter 32 can be a self-contained unit, or it can be fitted with remote seals as needed to fit the application. A flange on the pressure transmitter 32 (or its remote seals) couples to a flange adapter on the impulse lines 30 to complete the pressure connections. A flow circuit 34 in the pressure transmitter 32 couples to the sensor 31 and generates a flow rate output 36 that can couple to a controller or indicator as needed.

In FIG. 4, a difference circuit 42 couples to the sensor 31 and generates data at a difference output 44 representing the sensed pressure minus a moving average. A calculate circuit 46 receives the difference output 44 and calculates a trained output 48 of historical data obtained during a training mode or time interval. After training, calculate circuit 46 calculates a monitor output 50 of current data obtained during a monitoring mode or normal operation time of the fluid flow meter 20.

In FIG. 4, a diagnostic circuit 52 receives the trained output 48 and the monitor output 50 and generating a diagnostic output 54 indicating a current condition of the pressure generator 26 relative to an historical condition. In FIG. 4, calculate circuit 46 stores the historical data in circuit 56 which includes memory.

In difference circuit 42, the moving average is calculated according to the series in Eq. 1:

$$A_j = \sum_{k=0}^{m} (P_{j+k})(W_k) \qquad Eq. 1$$

where A is the moving average, P is a series of sequentially sensed pressure values, and W is a numerical weight for a sensed pressure value, m is a number of previous sensed pressure values in the series. Provision can also be made in difference circuit 42 to filter out spikes and other anomalies present in the sensed pressure. In FIG. 4, the historical data comprises statistical data, for example, the mean ($\mu$) and standard deviation ($\sigma$) of the difference output or other statistical measurements, and the diagnostic output 54 indicates impulse line plugging. The calculate circuit 46 switches between a training mode when it is installed and a monitoring mode when it is in use measuring flow. The calculate circuit 46 stores historical data in the training mode. The diagnostic output 54 indicates a real time condition of the pressure generator 26.

In FIG. 4, statistical data, such as the mean $\mu$ and standard deviation $\sigma$, are calculated based on a relatively large number of data points or flow measurements. The corresponding sample statistical data, such as sample mean $\underline{X}$ and sample standard deviation s, are calculated from a relatively smaller number of data points. Typically, hundreds of data points are used to calculate statistical data such as $\mu$ and $\sigma$, while only about 10 data points are used to calculate sample statistical data such as $\underline{X}$ and s. The number of data points during monitoring is kept smaller in order to provide diagnostics that is real time, or completed in about 1 second. Diagnostic circuit 52 indicates line plugging if the sample standard deviation s deviates from the standard deviation $\sigma$ by a preset amount, for example 10%.

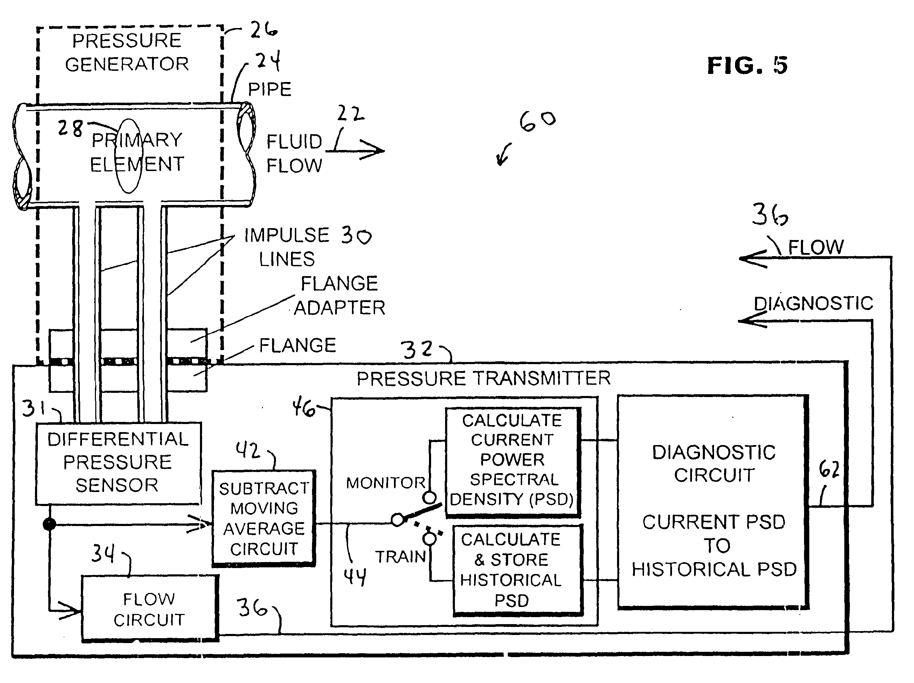

In FIG. 5, a fluid flow meter 60 is shown that diagnoses the condition of the primary element 28. The fluid flow meter 60 in FIG. 5 is similar to the fluid flow meter 20 of FIG. 4 and the same reference numerals used in FIG. 4 are also used in 5 for similar elements. In 5, the diagnostic output 62 indicates a condition of the primary element 28, while in FIG. 4, the diagnostic output indicates a condition of the impulse lines 30. In FIG. 5, calculate circuit 46 calculates and stores data on power spectral density (PSD) of the difference output 44 rather than statistical data which is used in FIG. 4. The power spectral density data is preferably in the range of 0 to 100 Hertz. The center frequency of a bandpass filter can be swept across a selected range of frequencies to generate a continuous or quasi-continuous power spectral density as a function of frequency in a manner that is well known. Various known Fourier transforms can be used.

Power spectral density, Fi, can also be calculated using Welch's method of averaged periodograms for a given data set. The method uses a measurement sequence *x(n)* sampled at *fs* samples per second, where *n = 1, 2, ...N*. A front end filter with a filter frequency less than *fs*/2 is used to reduce aliasing in the spectral calculations. The data set is divided into $F_{k,i}$ as shown in Eq. 2:

$$F_{k,i} = (1/M) \left| \sum_{n=1}^{M} x_k(n) e^{-j2\pi i \Delta f n} \right|^2 \qquad Eq. \ 2$$

There are $F_{k,i}$ overlapping data segments and for each segment, a periodogram is calculated where M is the number of points in the current segment. After all periodograms for all segments are evaluated, all of them are averaged to calculate the power spectrum:

$$Fi = (1/L) \sum_{k=1}^{L} F_{k,i} \qquad Eq. \ 3$$

Once a power spectrum is obtained for a training mode, this sequence is stored in memory, preferably EEPROM, as the baseline power spectrum for comparison to real time power spectrums. Fi is thus the power spectrum sequence and i goes from 1 to N which is the total number of points in the original data sequence. N, usually a power of 2, also sets the frequency resolution of the spectrum estimation. Therefore, Fi is also known as the signal strength at the $i^{th}$ frequency. The power spectrum typically includes a large number points at predefined frequency intervals, defining a shape of the spectral power distribution as a function of frequency.

In the detection of the primary element degradation, a relatively larger sample of the spectral density at baseline historical conditions and a relatively smaller sample of the spectral density at monitoring conditions are compared. The relatively smaller sample allows for a real time indication of problems in about 1 second. An increase in the related frequency components of the power spectrum can indicate the degradation of the primary element. Using orifice plates as primary elements, for example, changes as high as 10% are observed in spectral components when the orifice plate is degraded to a predetermined level. The amount of change can be adjusted as needed, depending on the tolerable amount of degradation and the type of primary element in use. The amount of change needed to indicate a problem is arrived at experimentally for each type of primary element arrangement. Fuzzy logic can also be used to compare the many points of the power spectrums.

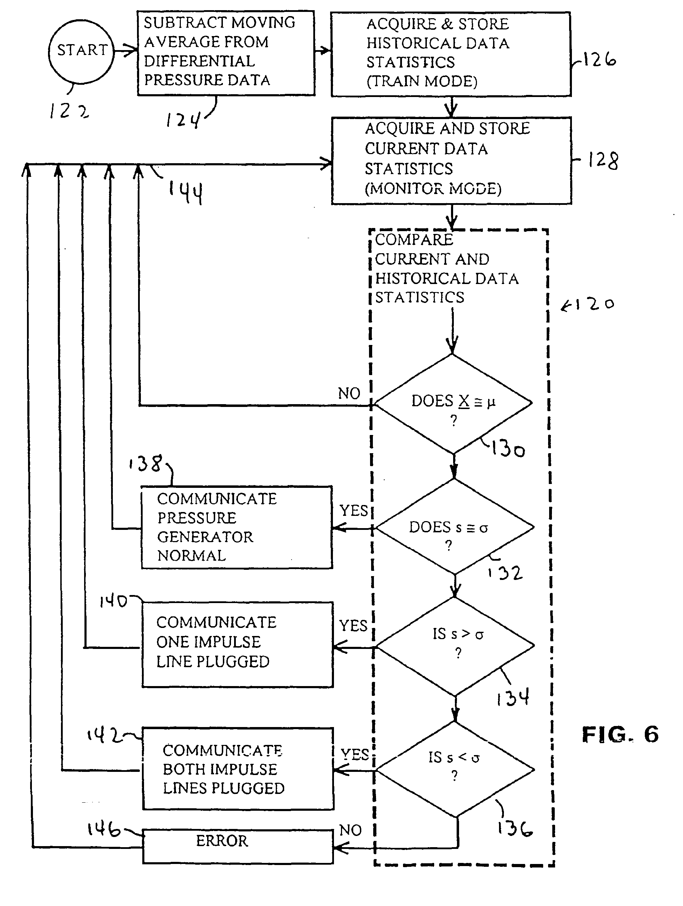

In FIG. 6, a flow chart 120 of a method of diagnosis performed in a pressure transmitter couplable to a primary flow element via impulse lines is shown. The algorithm starts at 122. A moving average is subtracted from differential pressure data as shown at 124 to calculate a difference. During a train mode, historical data on the calculated difference is acquired and stored at 126 as statistical data $\mu$ and $\sigma$, for example. During an operational MONITOR mode, current data on the difference is acquired and stored at 128 as statistical data $\underline{X}$ and s. The smaller sample of current data is compared to the larger sample of the historical data to diagnose the condition of the impulse lines. Comparisons of historical and current statistical data are made at 132, 134, 136 and a selected diagnostic transmitter output is generated at 138, 140, 142 as a function of the comparisons made at 130, 132, 134, 136 respectively. After completion of any diagnostic output, the process loops back at 144 to repeat the monitor mode diagnostics, or the transmitter can be shut down until maintenance is performed. If the diagnostic process itself fails, an error indication is provided on the diagnostic output at 146. In the method 120 of diagnosis, the historical data set comprises statistical data such as data on the mean ($\mu$) and standard deviation ($\sigma$) of the calculated difference; the current data set comprises current sample statistical data, such as the sample average ($\underline{X}$) and sample deviation (s) of the calculated difference. The sample deviation (s) is compared to the standard deviation ($\sigma$) to diagnose impulse line plugging, for example. Other known statistical measures of uncertainty, or statistical measures developed experimentally to fit this application can also be used besides mean and standard deviation. When there is an unusual flow condition where $\underline{X}$ is much different than $\mu$, the diagnostics can be temporarily suspended as shown at 130 until usual flow conditions are reestablished. This helps to prevent false alarm indications.

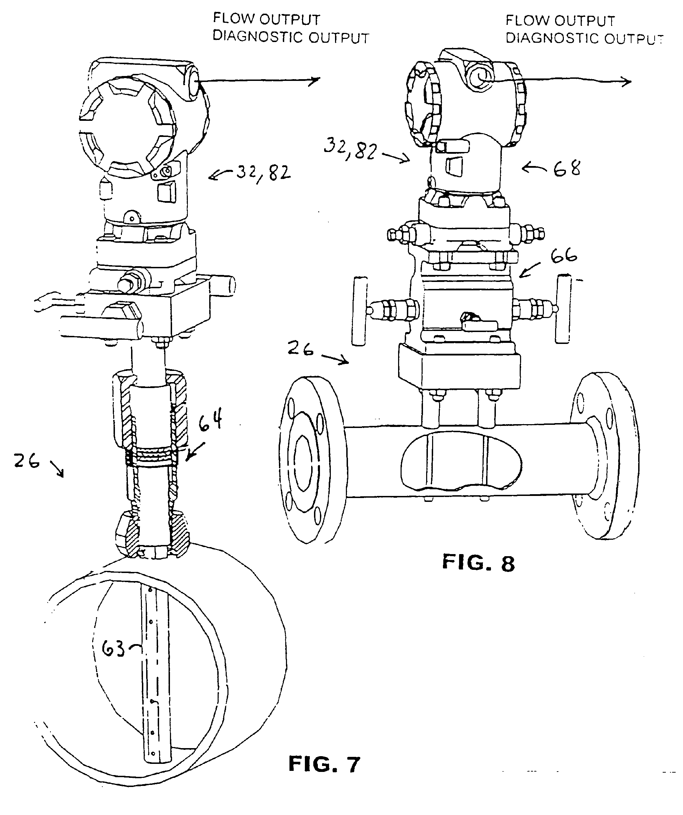

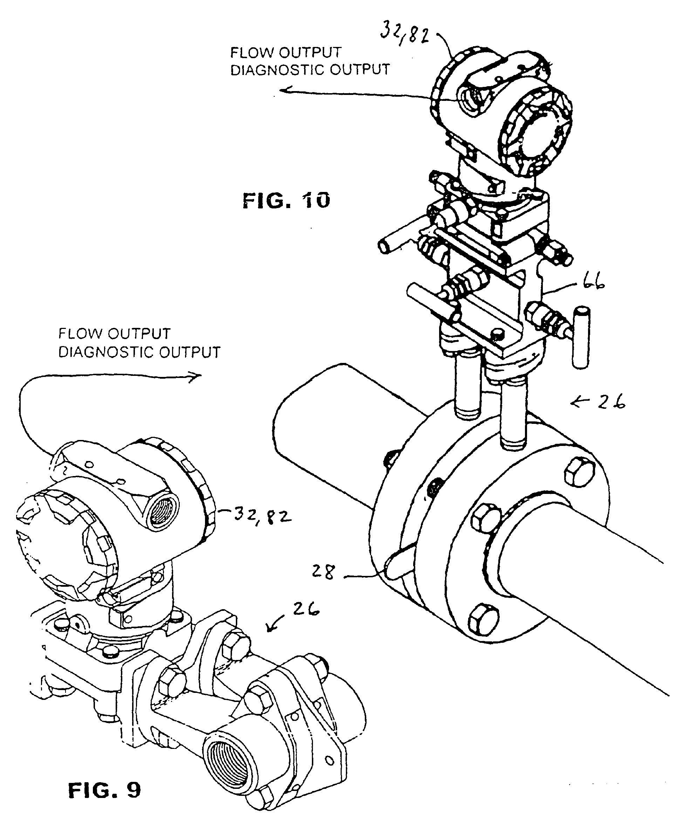

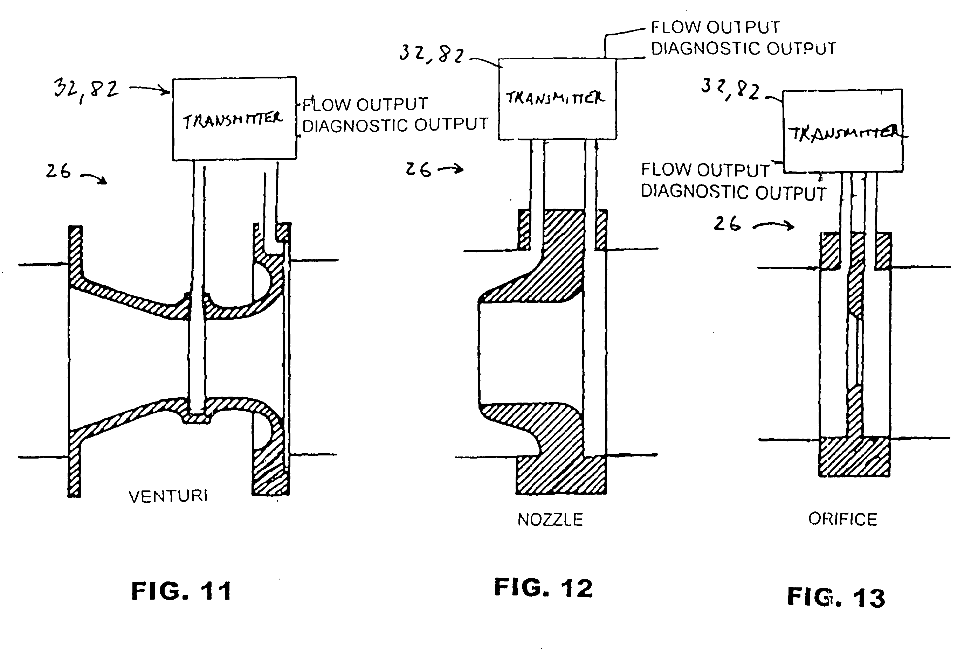

In FIGS. 2-5, the transmitter generates a calibrated output and also a diagnostic output that indicates if the pressure generator is out of calibration. In FIGS. 2-5, the primary element can comprise a simple pitot tube or an averaging pitot tube. The averaging pitot tube 63 can be inserted through a tap 64 on a pipe as shown in FIG. 7. An instrument manifold 66, as shown in FIG. 8, can be coupled between the pressure generator 26 and a pressure transmitter 68. The primary element 28 and impulse pipes 30 can be combined in an integral orifice as shown in FIG. 9. An orifice plate adapted for clamping between pipe flanges is shown in FIG. 10. The primary element can comprise a venturi as shown in FIG. 11 or a nozzle as shown in FIG. 12, or an orifice as shown in FIG. 13. A standard arrangement of a pressure generator can be used with a transmitter that is adapted to provide the diagnostics outputs. The transmitter adapts itself to the characteristics of the pressure generator during the training mode and has a standard of comparison stored during the training mode that is available for comparison during the monitoring or operational mode. The standard of comparison can be adjusted as needed by a technician via the digital communication bus. In each arrangement, the fluid flow meter provides a calibrated flow rate output and the diagnostic output of the transmitter indicates if the pressure generator is out of calibration.

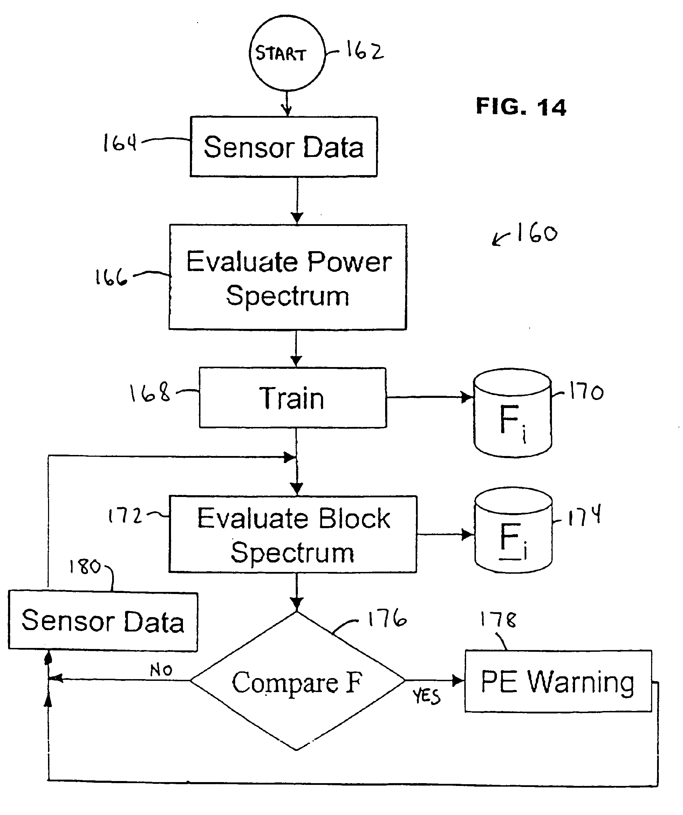

In FIG. 14, a flow chart 160 of a process for diagnosing the condition of a primary element is shown. The condition of the primary element can include erosion or fouling of the primary element. The method or algorithm starts at 162. Sensor data is taken in a training mode or time interval as shown at 164. A power spectrum of the sensor data, minus the moving average, is calculated at 166. The power spectrum obtained is identified as the training power spectrum at 168 and stored in non-volatile memory 170. After completion of training, the process moves on to monitoring or normal use. A further power spectrum of current sensor data, minus the moving average, is evaluated at 172, and the power spectrum so obtained in stored in memory 174, that can be either RAM or nonvolatile memory. At 176, the power spectrum Fi obtained during training is compared to the power spectrum $\underline{Fi}$ obtained during monitoring. If there is a significant difference between Fi and $\underline{Fi}$ which is indicative of a problem with the primary element, a primary element warning (PE Warning) is generated as shown at 178. If the power spectrums Fi and $\underline{Fi}$ are sufficiently similar, then no primary element warning is generated. After the comparison at 176 and generation of a PE Warning, as needed, program flow moves to obtain new real time sensor data at 180 and the monitoring process moves on to a new evaluation at 172, or the flow meter can shut down when there is a PE warning. The process 160 can loop continuously in the monitoring mode to provide real time information concerning the condition of the primary element.

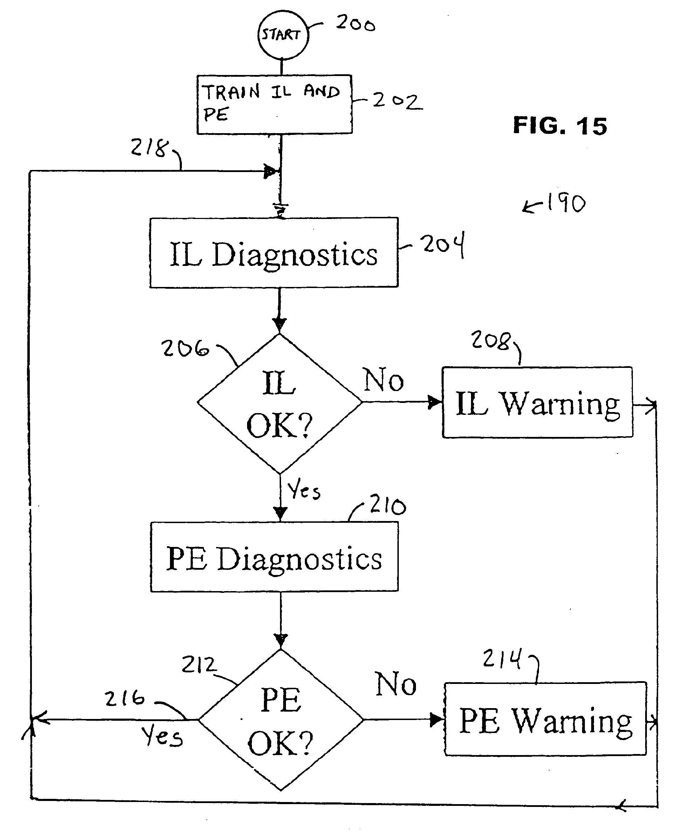

In FIG. 15, a flow chart illustrates a process 190 which provides diagnosis of both primary element (PE) and impulse lines (IL). Program flow starts at 200. During a training mode illustrated at 202, sensor data, minus a moving average, is obtained and training power spectrum and training statistics are stored in nonvolatile memory as explained above. Next, impulse line diagnostics (such as those explained in process 128 in Fig. 6) are performed at step 204 in FIG. 15. In FIG. 15, after impulse line diagnostics are performed, current impulse line statistics are compared to historical (training) impulse line statistics (as detailed in processes 130, 132, 134, 136 in FIG. 6) at 206. If the comparison indicates a problem with plugging of impulse lines, then an impulse line warning is generated as shown at 208. If no problem with the impulse lines is apparent, then program flow moves on to primary element (PE) diagnostics at 210. At process 210, power spectral density for the current real time data is calculated (as explained above in connection with FIG. 14). The current power spectral density is compared to the historical power spectral density at 212, and if there is a difference large enough to indicate a problem with the primary element, then a PE Warning is generated as shown at 214. If the differences in the power spectral densities are small, then no PE warning is generated as shown at 216. Program flow continues on at 218 to repeat the IL and PE diagnostics, or the flow meter can be shut down if there is a PE or IL warning until maintenance is performed.

Any of the methods can be stored on a computer-readable medium as a plurality of sequences of instructions, the plurality of sequences of instructions including sequences that, when executed by a microprocessor system in a pressure transmitter cause the pressure transmitter to perform a diagnostic method relative to a primary element and impulse lines couplable to the transmitter.

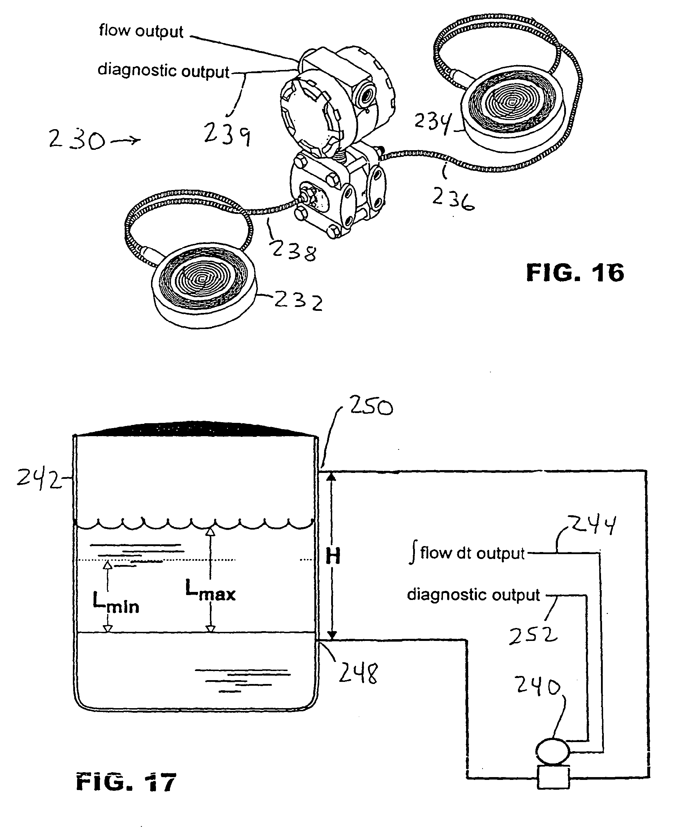

FIG. 16 illustrates a transmitter 230 which includes remote seals 232, 234 connected by flexible capillary tubes 236, 238 that are filled with a controlled quantity of isolation fluid such as silicon oil. The isolator arrangement permits placement of the sensor and electronics of transmitter 230 to be spaced away from extremely hot process fluids which contact the remote seals. The diagnostic circuitry of transmitter 230 can also be used to detect leaking and pinching off of capillary tubes 236, 238 using the diagnostic techniques described above to provide diagnostic output 239.

FIG. 17 schematically illustrates a transmitter 240 which is connected to taps 248, 250 near the bottom and top of tank 242. Transmitter 240 provides an output 244 that represents a time integral of flow in and out of the tank 242. Transmitter 240 includes circuitry, or alternatively software, that measures the differential pressure between the taps 248, 250 and computes the integrated flow as a function of the sensed differential pressure and a formula stored in the transmitter relating the sensed pressure to the quantity of fluid in the tank. This formula is typically called a strapping function and the quantity of fluid which has flowed into or out of the tank can be integrated as either volumetric or mass flow, depending on the strapping function stored in transmitter 240. The diagnostic circuitry or software in transmitter 240 operates as explained above to provide diagnostic output 252. FIG. 17 is a schematic illustration, and transmitter 240 can be located either near the bottom or the top of tank 242, with a tube going to the other end of the tank, often called a "leg." This leg can be either a wet leg filled with the fluid in the tank, or a dry leg filled with gas. Remote seals can also be used with transmitter 240.

Although the present invention has been described with reference to preferred embodiments, workers skilled in the art will recognize that changes can be made in form and detail without departing from the scope of the invention. For example, various function blocks of the invention have been described in terms of circuitry, however, many function blocks may be implemented in other forms such as digital and analog circuits, software and their hybrids. When implemented in software, a microprocessor performs the functions and the signals comprise digital values on which the software operates. A general purpose processor programmed with instructions that cause the processor to perform the desired process elements, application specific hardware components that contain circuit wired to perform the desired elements and any combination of programming a general purpose processor and hardware components can be used. Deterministic or fuzzy logic techniques can be used as needed to make decisions in the circuitry or software. Because of the nature of complex digital circuitry, circuit elements may not be partitioned into separate blocks as shown, but components used for various functional blocks can be intermingled and shared. Likewise with software, some instructions can be shared as part of several functions and be intermingled with unrelated instructions within the scope of the invention.

**Claims**

1. A pressure transmitter (230, 232, 234, 238) adapted to couple to a primary flow element (28) via impulse lines (30) to sense flow, the pressure transmitter comprising:

   a differential pressure sensor (31) adapted to couple to the impulse lines;
   an analog to digital converter (84) coupled to the pressure sensor for generating a series of digital representations (86) of the pressure; and
   **characterized by**
   a microprocessor system (88) arranged to receive the series of digital representations of pressure and programmed then to execute first and second algorithms stored therein, wherein
   the first algorithm (90), when executed, calculates a difference between, on the one hand, the series of digital representations and, on the other hand, a moving average of the series of digital representations, and
   the second algorithm (92), when executed, receives the difference and calculates a trained data set of historical data during a training mode and calculates a current data set during a monitoring mode and generates diagnostic data (102) by comparing the current data set to the historical data set to indicate changes in the condition of the primary flow element (28) and impulse lines (30) ;
   a digital to analog converter (96) coupled to the microprocessor system and arranged to generate an analog transmitter output (98) indicative of flow; and
   a digital communication circuit (100) arranged to receive the diagnostic data from the microprocessor system and to generate therefrom a transmitter output (102).

2. The pressure transmitter of Claim 1 wherein the microprocessor system is operable to store the trained data set.

3. The pressure transmitter of Claim 1 wherein the first algorithm is operable to use the moving average that has been calculated according to the series

$$A_j = \sum_{k=0}^{m} (P_{j+k})(W_k) \; .$$

   where A is the moving average, P is a series of sensed pressure values, and W is a weight for a sensed pressure value, m is a number of previous sensed pressure values in the series.

4. The pressure transmitter of Claim 1 wherein the trained data set comprises statistical data.

5. The pressure transmitter of Claim 1 wherein the analog transmitter output comprises a calibrated output, and the diagnostic transmitter output indicates if the pressure generator is out of calibration.

6. The pressure transmitter of Claim 1 wherein the trained data set of historical data comprises power spectral density of the difference.

7.  A diagnostic method performed in a pressure transmitter (230, 232, 234, 238) coupled to a primary flow element (28) via impulse lines (30), the method comprising:

    calculating (124) a difference between, on the one hand, a pressure sensed by the pressure transmitter and, on the other hand, a moving average of the sensed pressure;
    acquiring and storing (126) an historical data set of the calculated difference during a training mode of the pressure transmitter;
    acquiring and storing (128) a current data set of the calculated difference during a monitoring mode of the pressure transmitter;
    comparing (120) the current data set to the historical data set to diagnose the condition of the primary flow element (28) and impulse lines (30); and
    generating (138, 140, 142, 146) a transmitter output indicating the diagnosed condition of the primary flow element (28) and impulse lines (30) based on the comparison (120).

8.  A computer program product stored on a computer-readable medium having stored thereon instructions executable by a microprocessor system in a pressure transmitter (230, 232, 234, 238) to cause the pressure transmitter to perform a diagnostic operation relative to a primary element (28) and impulse lines (30) coupleable to the transmitter, the instructions comprising:

    calculating (124) a difference between, on the one hand, a pressure sensed by the pressure transmitter and, on the other hand, a moving average of the sensed pressure;
    acquiring and storing (126) an historical data set of the calculated difference during a training mode of the pressure transmitter;
    acquiring and storing (128) a current data set of the calculated difference during a monitoring mode of the pressure transmitter;
    comparing (120) the current data set to the historical data set to diagnose the condition of the primary element (28) and impulse lines (30); and
    generating (138, 140, 142, 146) a transmitter output indicating the diagnosed condition of the primary element (28) and impulse lines (30) based on the comparison (120).

**Patentansprüche**

1.  Drucksender (230, 232, 234, 238), welcher so ausgelegt ist, dass er über Impulsleitungen (30) an ein Hauptdurchflusselement (28) zur Messung von Durchfluss koppelt, wobei der Drucksender Folgendes aufweist:

    einen Differenzdrucksensor (31), der für die Kopplung an die Impulsleitungen ausgelegt ist;
    einen Analog-Digital-Wandler (84), der an den Drucksensor zur Erzeugung einer Reihe digitaler Wiedergaben (86) des Drucks gekoppelt ist; und
    **gekennzeichnet ist durch**:

    ein Mikroprozessorsystem (88), das für den Empfang der Reihe von digitalen Wiedergaben von Druck angeordnet ist und so programmiert ist, dass es dann einen ersten und zweiten darin gespeicherten Algorithmus ausführt, wobei
    der erste Algorithmus (90) bei Ausführung eine Differenz zwischen der Reihe von digitalen Wiedergaben einerseits und einem gleitenden Mittelwert der Reihe von digitalen Wiedergaben andererseits berechnet, und
    der zweite Algorithmus (92) bei Ausführung die Differenz empfängt und einen gelernten Datensatz von Stammdaten während eines Schulungsmodus berechnet und einen augenblicklichen Datensatz während eines Überwachungsmodus berechnet und Diagnosedaten (102) erzeugt, indem er den augenblicklichen Datensatz mit dem Stammdatensatz vergleicht, um Veränderungen des Zustands des Hauptdurchflusselements (28) und der Impulsleitungen (30) anzuzeigen;
    einen Digital-Analog-Wandler (96), der an das Mikroprozessorsystem gekoppelt und so ausgelegt ist, dass er ein analoges Sender-Ausgangssignal (98) erzeugt, das den Durchfluss anzeigt; und
    einen digitalen Kommunikationsschaltkreis (100), der für den Empfang der Diagnosedaten von dem Mikroprozessorsystem und für die Erzeugung eines Sender-Ausgangssignals (102) daraus ausgelegt ist.

2.  Drucksender nach Anspruch 1, **dadurch gekennzeichnet, dass** das Mikroprozessorsystem zur Speicherung des gelernten Datensatzes betriebsfähig ist.

3. Drucksender nach Anspruch 1, **dadurch gekennzeichnet, dass** der erste Algorithmus zur Verwendung des gleitenden Mittelwerts betriebsfähig ist, welcher gemäß der Reihe

$$A_j = \sum_{k=0}^{m} (P_{j+k})(W_k)$$

berechnet wird, wobei A der gleitende Mittelwert, P eine Reihe gemessener Druckwerte, und W ein Wichtung für einen gemessenen Druckwert ist, sowie m eine Anzahl zuvor gemessener Druckwerte in der Reihe ist.

4. Drucksender nach Anspruch 1, **dadurch gekennzeichnet, dass** der gelernte Datensatz statistische Daten aufweist.

5. Drucksender nach Anspruch 1, **dadurch gekennzeichnet, dass** das analoge Sender-Ausgangssignal ein kalibriertes Ausgangssignal aufweist, und dass das diagnostische Sender-Ausgangssignal anzeigt, ob der Druckgenerator nicht mehr kalibriert ist.

6. Drucksender nach Anspruch 1, **dadurch gekennzeichnet, dass** der gelernte Datensatz von Stammdaten eine Leistungsspektraldichte der Differenz aufweist.

7. Diagnoseverfahren, welches in einem über Impulsleitungen (30) an ein Hauptdurchflusselement (28) gekoppelten Drucksender (230, 232, 234, 238) durchgeführt wird, wobei das Verfahren die folgenden Schritte aufweist:

Berechnen (124) einer Differenz zwischen einerseits einem Druck, der vom Drucksender gemessen wird, und andererseits einem gleitenden Mittelwert des gemessenen Drucks;
Erwerben und Speichern (126) eines Stammdatensatzes der berechneten Differenz während eines Lernmodus des Drucksenders;
Erwerben und Speichern (128) eines augenblicklichen Datensatzes der berechneten Differenz während eines Überwachungsmodus des Drucksenders;
Vergleichen (120) des augenblicklichen Datensatzes mit dem Stammdatensatz zur Diagnose des Zustands des Hauptdurchflusselements (28) und der Impulsleitungen (30); und
Erzeugen (138, 140, 142, 146) eines Sender-Ausgangssignal, welches den diagnostizierten Zustand des Hauptdurchflusselements (28) und der Impulsleitungen (30) basierend auf dem Vergleich (120) anzeigt.

8. Computerprogrammprodukt, welches auf einem computerlesbaren Medium, das gespeicherte Befehle aufweist, die von einem Mikroprozessorsystem in einem Drucksender (230, 232, 234, 238) ausführbar sind, gespeichert ist, um zu bewirken, dass der Drucksender einen Diagnosevorgang abhängig von einem Hauptelement (28) und Impulsleitungen (30) ausführt, die an den Sender anschließbar sind, wobei die Befehle folgende Schritte umfassen:

Berechnen (124) einer Differenz zwischen einem vom Drucksender gemessenen Druck einerseits, und einem gleitenden Mittelwert des gemessenen Drucks andererseits;
Erwerben und Speichern (126) eines Stammdatensatzes der berechneten Differenz während eines Lernmodus des Drucksenders;
Erwerben und Speichern (128) eines augenblicklichen Datensatzes der berechneten Differenz während eines Überwachungsmodus des Drucksenders;
Vergleichen (120) des augenblicklichen Datensatzes mit dem Stammdatensatz zur Diagnose des Zustands des Hauptelements (28) und der Impulsleitungen (30); und
Erzeugen (138, 140, 142, 146) eines Sender-Ausgangssignals, welches den Diagnosezustand des Hauptelements (28) und der Impulsleitungen (30) basierend auf dem Vergleich (120) anzeigt.

**Revendications**

1. Transmetteur de pression (230, 232, 234, 238) adapté pour se coupler à un élément d'écoulement principal (28) via des conduites d'impulsion (30) pour détecter l'écoulement, le transmetteur de pression comprenant :

un capteur de pression différentielle (31) adapté pour se coupler aux conduites d'impulsion ;
un convertisseur analogique-numérique (84) couplé au capteur de pression pour générer une série de représentations numériques (86) de la pression ; et

**caractérisé par**
un système de microprocesseur (88) agencé pour recevoir la série de représentations numériques de la pression et programmé ensuite pour exécuter des premier et second algorithmes stockés dedans, dans lequel
le premier algorithme (90), lorsqu'il est exécuté, calcule une différence entre, d'une part, la série de représentations numériques et d'autre part, une moyenne mobile de la série de représentations numériques, et
le second algorithme (92), lorsqu'il est exécuté, reçoit la différence et calcule un jeu de données formées de données historiques pendant un mode apprentissage et calcule un jeu de données courantes pendant un mode surveillance et génère des données de diagnostic (102) en comparant le jeu de données courantes au jeu de données historiques pour indiquer des changements dans la condition de l'élément d'écoulement principal (28) et les conduites d'impulsion (30) ;
un convertisseur numérique-analogique (96) couplé au système de microprocesseur et agencé pour générer une sortie de transmetteur analogique (98) indicative de l'écoulement ; et
un circuit de communication numérique (100) agencé pour recevoir les données de diagnostic en provenance du système de microprocesseur et pour générer à partir de celles-ci une sortie de transmetteur (102).

2. Transmetteur de pression selon la revendication 1, dans lequel le système de microprocesseur peut fonctionner pour stocker le jeu de données formées.

3. Transmetteur de pression selon la revendication 1, dans lequel le premier algorithme peut fonctionner pour utiliser la moyenne mobile qui a été calculée en fonction de la série

$$A_j = \sum_{k=0}^{n} (P_{j+k})(W_k) \, .$$

où A est la moyenne mobile, P est une série de valeurs de pression détectées et W est un poids pour une valeur de pression détectée, m est un nombre de valeurs de pression détectées précédentes dans la série.

4. Transmetteur de pression selon la revendication 1, dans lequel le jeu de données formées comprend des données statistiques.

5. Transmetteur de pression selon la revendication 1, dans lequel la sortie de transmetteur analogique comprend une sortie calibrée et la sortie de transmetteur de diagnostic indique si le générateur de pression est décalibré.

6. Transmetteur de pression selon la revendication 1, dans lequel le jeu de données formées de données historiques comprend une densité spectrale de puissance de la différence.

7. Procédé de diagnostic mis en oeuvre dans un transmetteur de pression (230, 232, 234, 238) couplé à un élément d'écoulement principal (28) via des conduites d'impulsion (30), le procédé comprenant :

le calcul (124) d'une différence entre, d'une part, une pression détectée par le transmetteur de pression et d'autre part, une moyenne mobile de la pression détectée ;
l'acquisition et le stockage (126) d'un jeu de données historiques de la différence calculée pendant un mode apprentissage du transmetteur de pression ;
l'acquisition et le stockage (128) d'un jeu de données courantes de la différence calculée pendant un mode surveillance du transmetteur de pression ;
la comparaison (120) du jeu de données courantes avec le jeu de données historiques pour diagnostiquer la condition de l'élément d'écoulement principal (28) et des conduites d'impulsion (30) ; et
la génération (138, 140, 142, 146) d'une sortie de transmetteur indiquant la condition diagnostiquée de l'élément d'écoulement principal (28) et des conduites d'impulsion (30) sur la base de la comparaison (120).

8. Programme d'ordinateur stocké sur un support lisible par ordinateur ayant stocké dessus des instructions exécutables par un système de microprocesseur dans un transmetteur de pression (230, 232, 234, 238) pour amener le transmetteur de pression à effectuer une opération de diagnostic par rapport à un élément principal (28) et à des conduites d'impulsion (30) pouvant être couplés au transmetteur, les instructions comprenant :

le calcul (124) d'une différence entre, d'une part, une pression détectée par le transmetteur de pression et d'autre part, une moyenne mobile de la pression détectée ;
l'acquisition et le stockage (126) d'un jeu de données historiques de la différence calculée pendant un mode apprentissage du transmetteur de pression ;
l'acquisition et le stockage (128) d'un jeu de données courantes de la différence calculée pendant un mode surveillance du transmetteur de pression ;
la comparaison (120) du jeu de données courantes avec le jeu de données historiques pour diagnostiquer la condition de l'élément principal (28) et des conduites d'impulsion (30) ; et
la génération (138, 140, 142, 146) d'une sortie de transmetteur indiquant la condition diagnostiquée de l'élément principal (28) et des conduites d'impulsion (30) sur la base de la comparaison (120).

**FIG. 1**

CONTROL VALVE

TANK

FLOWMETER

LEVEL TRANSMITTER

CONTROL SYSTEM

PRESSURE TRANSMITTER

ORIFICE

82

88

96

100 84

31

83

87

**FIG. 2**

FIG. 3

EP 1 155 289 B1

FIG. 4

**FIG. 5**

PRESSURE GENERATOR — 26 / 24 PIPE — 22 FLUID FLOW — 28 PRIMARY ELEMENT — IMPULSE LINES 30 — FLANGE ADAPTER — FLANGE — 32 PRESSURE TRANSMITTER — 60 — 36 FLOW — DIAGNOSTIC

DIFFERENTIAL PRESSURE SENSOR — 31 — 34 — FLOW CIRCUIT — 36 — 42 SUBTRACT MOVING AVERAGE CIRCUIT — 46 — MONITOR / TRAIN — 44 — CALCULATE CURRENT POWER SPECTRAL DENSITY (PSD) — CALCULATE & STORE HISTORICAL PSD — DIAGNOSTIC CIRCUIT CURRENT PSD TO HISTORICAL PSD — 62

START — 122

SUBTRACT MOVING AVERAGE FROM DIFFERENTIAL PRESSURE DATA — 124

ACQUIRE & STORE HISTORICAL DATA STATISTICS (TRAIN MODE) — 126

ACQUIRE AND STORE CURRENT DATA STATISTICS (MONITOR MODE) — 128

144

COMPARE CURRENT AND HISTORICAL DATA STATISTICS — 120

DOES $\underline{X} \cong \mu$ ? — 130 — NO

DOES $s \cong \sigma$ ? — 132 — YES

COMMUNICATE PRESSURE GENERATOR NORMAL — 138

IS $s > \sigma$ ? — 134 — YES

COMMUNICATE ONE IMPULSE LINE PLUGGED — 140

IS $s < \sigma$ ? — 136 — YES

COMMUNICATE BOTH IMPULSE LINES PLUGGED — 142

ERROR — 146 — NO

FIG. 6

FLOW OUTPUT
DIAGNOSTIC OUTPUT

FLOW OUTPUT
DIAGNOSTIC OUTPUT

← 32,82

32,82 →

← 68

← 66

26 →

64

26 ↓

63

**FIG. 8**

**FIG. 7**

FLOW OUTPUT
DIAGNOSTIC OUTPUT

32,82

**FIG. 10**

66

26

28

FLOW OUTPUT
DIAGNOSTIC OUTPUT

32,82

26

**FIG. 9**

32,82 → TRANSMITTER FLOW OUTPUT DIAGNOSTIC OUTPUT

26 →

VENTURI

**FIG. 11**

FLOW OUTPUT DIAGNOSTIC OUTPUT

32,82 → TRANSMITTER

26 →

NOZZLE

**FIG. 12**

32,82 → TRANSMITTER

FLOW OUTPUT DIAGNOSTIC OUTPUT

26 →

ORIFICE

**FIG. 13**

EP 1 155 289 B1

**FIG. 14**

START — 162

Sensor Data — 164

Evaluate Power Spectrum — 166

↙160

Train — 168 → $F_i$ — 170

Evaluate Block Spectrum — 172 → $\underline{F}_i$ — 174

Sensor Data — 180

Compare F — 176

No

Yes

PE Warning — 178

**FIG. 15**

START ~ 200

TRAIN IL AND PE ~ 202

← 190

218

IL Diagnostics ~ 204

206 — IL OK? — No → IL Warning 208

Yes

PE Diagnostics ~ 210

212 — PE OK? — No → PE Warning 214

216 — Yes

flow output

diagnostic output

230 →   239

234

236

232

238

**FIG. 16**

250

242

H

L_min   L_max

∫flow dt output   244

diagnostic output

252

240

248

**FIG. 17**